# EUROPÄISCHE PATENTSCHRIFT

(11) **EP 2 708 667 B1**
(45) Veröffentlichungstag und Bekanntmachung des Hinweises auf die Patenterteilung: **23.11.2016**
(21) Anmeldenummer: 12184179.5
(22) Anmeldetag: 13.09.2012
(51) Int. Cl.: E04B 1/76, E04B 1/94, C08J 9/00, C08J 9/224, C08J 9/236

(54) **Verfahren zur Herstellung eines flammgeschützten Dämmelementes, Dämmelement sowie Verwendung eines Dämmelementes**
Method for producing a flame retardant insulating element, insulating element and use of an insulating element
Procédé de fabrication d'un élément d'isolation ignifuge, élément d'isolation ainsi que l'utilisation d'un élément d'isolation

(43) Veröffentlichungstag der Anmeldung: 19.03.2014
(73) Patentinhaber: STO SE & Co. KGaA, 79780 Stühlingen (DE)
(72) Erfinder: Hitzler, Martin, 78244 Gottmadingen (DE); Kohler, Eva, 79777 Ühlingen-Birkendorf (DE); Leingruber, Silke, 78176 Blumberg-Epenhofen (DE); Weier, Andreas, 78647 Trossingen (DE); Isele, Robert, 79777 Berau (DE)
(74) Vertreter: Gottschalk, Matthias

(56) Entgegenhaltungen:
- EP-A1- 0 994 145
- EP-A2- 0 113 511
- WO-A1-2008/145599
- US-A1- 2010 204 350

## Beschreibung

Die Erfindung betrifft ein Verfahren zur Herstellung eines flammgeschützten Dämmelementes mit den Merkmalen des Oberbegriffs des Anspruchs 1. Ferner betrifft die Erfindung ein Dämmelement sowie eine Verwendung eines nach einem erfindungsgemäßen Verfahren hergestellten Dämmelementes.

### Stand der Technik

Bei der Schall- und/oder Wärmedämmung von Gebäudewänden oder -decken finden häufig Hartschaumplatten, insbesondere Polystyrol-Hartschaumplatten, als Dämmelemente Einsatz. Diese weisen zum einen gute Wärmedämmeigenschaften auf und sind zum anderen relativ kostengünstig herstellbar. Zudem sind sie auf der Baustelle einfach zu handhaben, da sie formstabil und wasserunempfindlich sind. Als nachteilig erweist sich jedoch in der Regel das Brandverhalten von Dämmelementen aus einem Hartschaum, welche daher regelmäßig der Baustoffklasse B (brennbare Baustoffe) gemäß DIN 4102-1 zuzuordnen sind.

Aus der WO 2008/145599 A1 ist ein feuerhemmender Polystyrol-Schaumstoff bekannt, welcher zum einen ein verbessertes Brandverhalten aufweisen und zum anderen keine Verschlechterung seiner ursprünglichen Eigenschaften aufweisen soll. Insbesondere soll der Polystyrol-Schaumstoff weiterhin eine geringe Wasserdurchlässigkeit, eine hohe Wasserbeständigkeit, sehr guter Wärmedämm- und Schallschutzeigenschaften sowie eine hohe mechanische Festigkeit bei gleichzeitig geringem Gewicht bzw. geringer Dichte aufweisen. Darüber hinaus soll die Herstellbarkeit des Polystyrol-Schaumstoffs auf den herkömmlichen Anlagen gewährleistet sein, so dass er weiterhin kostengünstig herstellbar ist. Gemäß der Druckschrift werden diese Ziele durch eine Zusammensetzung erreicht, welche expandierte oder expandierbare Polystyrol-Partikel, einen intumeszenten Stoff und einen feuerbeständigen Binder umfasst. Der Anteil der Polystyrol-Partikel beträgt dabei 20-75 Gew.-% bezogen auf das Gesamtgewicht der Zusammensetzung bestehend aus Polystyrol-Partikel, intumeszenter Stoff und Binder. Das heißt, dass der Polystyrol-Partikelanteil unter Umständen deutlich reduziert ist. Dies muss zwangsläufig eine Veränderung der Wärmedämmeigenschaften eines hieraus hergestellten Dämmelementes zur Folge haben, wenn die fehlenden Polystyrol-Partikel nicht durch gleichwertige Dämmstoffe ersetzt werden. Um zudem weiterhin die mechanische Stabilität des Schaumstoffformkörpers zu gewährleisten, muss der Bindemittelanteil erhöht werden. Der hohe Bindemittelanteil wiederum macht den Einsatz eines nicht brennbaren Bindemittels erforderlich. Es ist jedoch allgemein bekannt, dass die Bindekraft nicht brennbarer, in der Regel anorganischer Bindemittel im Vergleich zu organischen Bindemitteln herabgesetzt ist, so dass eher eine Entmischung der Ausgangsstoffe in der Form zu erwarten ist, welche die Qualität des derart hergestellten Schaumstoffformkörpers beeinträchtigt.

Weitere flammgeschützte Dämmelemente sowie Verfahren zu deren Herstellung sind aus den Druckschriften US 2010 0204350 A1, EP 0 994 145 A1 sowie EP 0 113 511 A2 bekannt.

Ausgehend von dem vorstehend genannten Stand der Technik liegt der vorliegenden Erfindung die Aufgabe zugrunde, ein Verfahren zur Herstellung eines flammgeschützten, Polystyrol-Partikel enthaltenden Dämmelementes anzugeben, das einerseits ein gegenüber herkömmlichen Polystyrol-Hartschaumplatten aus Brandschutzsicht verbessertes Brandschutzverhalten sowie andererseits hervorragende Wärmedämmeigenschaften aufweist. Zugleich soll ein Dämmelement mit einer hohen mechanischen Stabilität geschaffen werden.

Zur Lösung der Aufgaben wird ein Verfahren mit den Merkmalen des Anspruchs 1 vorgeschlagen. Vorteilhafte Weiterbildungen des erfindungsgemäßen Verfahrens sind in den auf Anspruch 1 rückbezogenen Unteransprüchen angegeben. Ferner werden ein Dämmelement mit den Merkmalen des Anspruchs 11 sowie eine Verwendung eines nach einem erfindungsgemäßen Verfahren hergestellten Dämmelementes vorgeschlagen.

### Offenbarung der Erfindung

Bei dem zur Herstellung eines flammgeschützten Dämmelementes vorgeschlagenen Verfahren werden vorgeschäumte Polystyrol-Partikel verwendet, von denen zumindest ein Teil vor dem Einfüllen in eine Form und dem Versintern beschichtet werden. Die vorgeschäumten Polystyrol-Partikel werden zumindest teilweise mit einem organischen Bindemittel und mit wenigstens einem Flammschutzmittel beschichtet. Zumindest "teilweise" kann in diesem Zusammenhang bedeuten, dass ein Teil der verwendeten Polystyrol-Partikel unbeschichtet bleibt und/oder die Beschichtung lediglich partiell auf zumindest einen Teil der vorgeschäumten Polystyrol-Partikel aufgebracht wird. D.h., dass zumindest ein Teil der Polystyrol-Partikel nicht vollständig von der aufgebrachten Beschichtung umhüllt sein muss und demnach unbeschichtete Oberflächenbereiche aufweisen kann. Der Anteil unbeschichteter und/oder lediglich teilweise beschichteter Polystyrol-Partikel fördert einen Verbund der Partikel untereinander, indem diese - wie bei der Herstellung herkömmlichen Polystyrol-Hartschaums - während des Versinterns miteinander verschmelzen. Dadurch bleibt eine hohe mechanische Stabilität des derart hergestellten Formkörpers erhalten. Ferner wird auf diese Weise der Bindemittelanteil reduziert. Der geringe Bindemittelanteil ermöglicht die Verwendung eines organischen Bindemittels, das gegenüber anorganischen Bindemitteln zwar brennbar ist, dafür aber eine erhöhte Bindekraft besitzt. Dies wirkt sich insbesondere positiv auf die Bindung des Flammschutzmittels an den Polystyrol-Partikeln aus.

Zwar kann grundsätzlich auch über eine aushärtende Bindemittelmatrix ein Verbund der Polystyrol-Partikel untereinander erzielt werden, sofern das Bindemittel jedoch ferner Flammschutzmittel in Form von Feststoffen enthält, können diese zu einer deutlichen Absenkung der Stabilität des Verbundes führen. Insofern erweist sich ein Verschweißen bzw. Versintern der Polystyrol-Partikel im Hinblick auf die mechanische Festigkeit des nach einem erfindungsgemäßen Verfahren hergestellten Dämmelementes als vorteilhaft.

Bevorzugt wird ein Flammschutzmittel zum Beschichten der vorgeschäumten Polystyrol-Partikel verwendet, das im Brandfall eine ablative oder intumeszierende Schutzschicht bildet. Unter einer ablativen Schutzschicht wird vorliegend eine nicht brennbare Schutzschicht verstanden, die "passiv" Feuerwiderstand leistet. Unter einer intumeszierenden Schutzschicht wird eine Schutzschicht verstanden, die erst im Brandfall durch Aufschäumen eine isolierende Schutzschicht ausbildet und demnach "aktiv" Feuerwiderstand leistet. Darüber hinaus können Wasser freisetzende "kühlende" Flammschutzmittel eingesetzt werden, beispielsweise Metallhydroxide, Alkalimetallsilikate sowie Hydrate von Metallsalzen oder -oxiden, die bei erhöhten Temperaturen chemisch oder physikalisch gebundenes Wasser abgeben. Entsprechende Flammschutzmittel sind hinlänglich bekannt und werden von verschiedenen Herstellern angeboten.

Alternativ oder ergänzend wird vorgeschlagen, dass Blähgraphit als Flammschutzmittel verwendet wird. Die flammwidrige Ausstattung der Beschichtung wird durch die Einbindung von Blähgraphit deutlich verbessert. Der Begriff "Blähgraphit" bezeichnet eine synthetisch hergestellte Produktgruppe aus natürlichem Graphit und blähbaren S- und/oder N-Verbindungen, die in die Schichtstruktur des Graphits eingelagert werden. Letztere expandieren unter Einfluss von Hitze, so dass eine aktive Brandbarriere aufgebaut wird. Die Blährate kann dabei bis um das Mehrhundertfache des ursprünglichen Volumens des Blähgraphits betragen.

Weiterhin bevorzugt wird ein wasserbasiertes oder wasserfreies duroplastisches Bindemittel, wie beispielsweise Epoxidharz oder Polyurethan, ein wasserbasiertes oder wasserfreies Dispersionsbindemittel und/oder eine Acrylat, Styrolacrylat, Vinylacetat, Vinylacetat-Ethylen und/oder Vinylchlorid enthaltende Formulierung als organisches Bindemittel verwendet. Dank des relativ geringen Bindemittelanteils können selbst nicht feuerbeständige organische Bindemittel verwendet werden.

Gemäß einer bevorzugten Ausführungsform der Erfindung werden das Bindemittel und das Flammschutzmittel zeitlich versetzt auf die vorgeschäumten Polystyrol-Partikel aufgebracht. Dabei erfolgt die Beschichtung mit Flammschutzmittel vorzugsweise nach der Beschichtung mit Bindemittel. Die Beschichtung bzw. Beschichtungen kann bzw. können mittels Sprühen, Spritzen, Tauchen und/oder Mischen aufgebracht werden. Beim Sprühen oder Spritzen wird bzw. werden das Bindemittel und/oder das Flammschutzmittel aktiv auf die vorgeschäumten Polystyrol-Partikel aufgebracht, wobei in einfacher Weise Teilbereiche der Partikeloberflächen unbeschichtet belassen bleiben können. Beim Tauchen oder Mischen erfolgt in der Regel eine vollständige Umhüllung der Polystyrol-Partikel mit Bindemittel und/oder Flammschutzmittel. Welches Beschichtungsverfahren eingesetzt wird, hängt demnach insbesondere davon ab, ob die Oberflächen der Polystyrol-Partikel vollständig oder nur teilweise beschichtet werden.

Vorteilhafterweise werden die vorgeschäumten und zumindest mit Bindemittel beschichteten Polystyrol-Partikel vor dem vollständigen Trocknen der Beschichtung mit einem Flammschutzmittel beschichtet. D.h., dass die Aufbringung des Flammschutzmittels in einem nachfolgenden, separaten Arbeitsschritt erfolgt, solange die zuvor aufgebrachte Bindemittelbeschichtung noch "feucht" ist bzw. nicht vollständig durchgetrocknet ist. Dadurch wird eine sehr gute Haftung des Flammschutzmittels an den Polystyrol-Partikeln erzielt.

Erfindungsgemäß wird vorgeschlagen, dass die vorgeschäumten und mit Bindemittel und Flammschutzmittel beschichteten Polystyrol-Partikel vor dem vollständigen Trocknen der Beschichtung in eine Form eingegeben und versintert werden. D.h., dass die vorgeschäumten und beschichteten Polystyrol-Partikel vorzugsweise "feucht" in die Form eingegeben werden. Dies hat den Vorteil, dass einer Entmischung der Stoffe in der Form entgegen gewirkt wird.

Gemäß einer bevorzugten Ausführungsform der Erfindung werden den beschichteten vorgeschäumten Polystyrol-Partikeln vor dem Eingeben in eine Form unbeschichtete vorgeschäumte Polystyrol-Partikel beigemischt. Die Beimischung unbeschichteter vorgeschäumter Polystyrol-Partikel - wie auch die Beimischung oder ausschließliche Verwendung lediglich partiell beschichteter vorgeschäumter Polystyrol-Partikel - fördert ein Verschmelzen der Polystyrol-Partikel miteinander. Wie bereits erwähnt, bewirkt das Verschmelzen bzw. Versintern einen stabilen Verbund der Polystyrol-Partikel untereinander, so dass ein derart hergestelltes Dämmelement eine hohe mechanische Festigkeit aufweist. Vorteilhafterweise beträgt der Anteil der unbeschichteten vorgeschäumten Polystyrol-Partikel 0 bis 95 Vol.-%, vorzugsweise 25 bis 90 Vol.-% und besonders bevorzugt 50 bis 88 Vol.-% bezogen auf das Gesamtvolumen der vorgeschäumten Polystyrol-Partikel.

Die Beimischung unbeschichteter vorgeschäumter Polystyrol-Partikel bewirkt ferner, dass der Gewichtsanteil der Polystyrol-Partikel in Bezug auf die Ausgangsstoffe erhöht wird. Ein nach diesem Verfahren hergestellter Polystyrol-Partikelschaum weist demnach sehr gute Wärmedämmeigenschaften vergleichbar denen herkömmlicher Polystyrol-Schaumstoffe auf. Im Unterschied zu diesen besitzt der nach einem erfindungsgemäßen Verfahren hergestellte Polystyrol-Partikelschaum jedoch eine erhöhte Brandbeständigkeit. Die erhöhte Brandbeständigkeit wird selbst dann erreicht, wenn ein organisches, d.h. brennbares Bindemittel zum Beschichten der Polystyrol-Partikel verwendet wird. Denn der Bindemittelanteil wird vorliegend so gering wie möglich gehalten.

Anhand von Versuchen an Probekörpern wurde überraschenderweise festgestellt, dass eine erhöhte Zugabe von Bindemitteln und/oder Flammschutzmitteln nicht zwangsläufig auch zu einer erhöhten Brandbeständigkeit des Dämmelementes führt. Insbesondere mit zunehmender Menge an Bindemittel -unabhängig davon, ob brennbar oder nicht brennbar- besteht die Gefahr, dass die Brandbeständigkeit abnimmt. Dies liegt darin begründet, dass das Bindemittel Stege zwischen den Polystyrol-Partikeln ausbildet, welche im Brandfall gleichsam als "Docht" wirken, entlang dessen sich ein Feuer ausbreiten kann. Derartige Bindemittelstege unterstützen demnach die Brandausbreitung. Insofern gilt es, die Ausbildung solcher Bindemittelstege zu verhindern, was insbesondere dann gelingt, wenn der Bindemittelanteil möglichst gering gehalten wird.

Gemäß einer bevorzugten Ausführungsform der Erfindung werden 30 bis 95 Gew.-% Polystyrol-Partikel, 2,5 bis 67,5 Gew.-% Bindemittel und 2,5 bis 67,5 Gew.-% Flammschutzmittel, vorzugsweise 40 bis 90 Gew.-% Polystyrol-Partikel, 5 bis 55 Gew.-% Bindemittel und 5 bis 55 Gew.-% Flammschutzmittel, weiterhin vorzugsweise 50 bis 85 Gew.-% Polystyrol-Partikel, 7,5 bis 35 Gew.-% Bindemittel und 7,5 bis 35 Gew.-% Flammschutzmittel, bezogen auf das Trockengesamtgewicht der Ausgangsstoffe verwendet. Die Vorteile eines geringen Bindemittelanteils sind bereits vorstehend eingehend beschrieben worden, so dass zwecks Vermeidung von Wiederholungen hierauf verwiesen wird. Um einen Dämmstoff mit hervorragenden Wärmedämmeigenschaften zu erhalten, liegt der Gewichtsanteil der Polystyrol-Partikel besonders bevorzugt bei mindestens 76 Gew.-% bezogen auf das Trockengesamtgewicht der Ausgangsstoffe.

Gemäß einer weiteren bevorzugten Ausführungsform der Erfindung beträgt das Gewichtsverhältnis der vorgeschäumten Polystyrol-Partikel zum Flammschutzmittel bezogen auf das jeweilige Trockengewicht 0,4 bis 38, vorzugsweise 0,75 bis 34, weiterhin vorzugsweise 1,05 bis 20. Versuche mit entsprechend hergestellten Dämmelementen haben gezeigt, dass diese eine erhöhte Brandbeständigkeit bzw. verringerte Entzündungsneigung aufweisen.

Gemäß einer Weiterbildung der Erfindung werden schäumbare und/oder vorgeschäumte thermoplastische Partikel bestehend aus Polyethylen oder Polypropylen oder Copolymeren aus einem oder beiden vorgenannten Stoffen mit Polystyrol vor dem Versintern zumindest teilweise mit zumindest einem Bindemittel und mit wenigstens einem Flammschutzmittel beschichtet.

In einer bevorzugten Ausführung der Erfindung werden vor dem vollständigen Trocknen der Beschichtung die beschichteten und/oder unbeschichteten thermoplastischen Partikel vor dem Versintern mit beschichteten und/oder unbeschichteten Polystyrol-Partikeln in eine Form eingegeben und geschäumt.

Die Veränderung des Anteils der den thermoplastischen Partikeln beigemischten Polystyrol-Partikeln führt beispielsweise zu einer Verbesserung der schall- und wärmedämmenden Eigenschaften der nach diesem Verfahren hergestellten Dämmelemente.

Gemäß einer Weiterbildung der Erfindung werden den vorgeschäumten, beschichteten und/oder unbeschichteten Polystyrol-Partikeln vor dem Eingeben in die Form Fasern, Füllstoffe und/oder Additive zugegeben. Durch die Zugabe von Fasern, Füllstoffen und/oder Additiven können die stoffspezifischen Eigenschaften des Dämmelementes beeinflusst werden. So kann beispielsweise durch die Zugabe von Fasern die mechanische Festigkeit des Dämmelementes erhöht werden.

Das vorstehend beschriebene erfindungsgemäße Verfahren weist einen weiteren Vorteil auf, der darin besteht, dass die bislang zur Herstellung von Dämmelementen aus Polystyrol-Hartschaum eingesetzten Anlagen weiterhin eingesetzt werden können. D.h., dass keine neue Anlagentechnik erforderlich ist, so dass das Verfahren relativ kostengünstig durchführbar ist. Insbesondere können die zur Durchführung des bekannten Blockschäumverfahrens verwendeten Anlagen sowie die bekannten Formteilautomaten eingesetzt werden.

Vorteilhafterweise werden die Ausgangsstoffe in der Form unter Zugabe von Druck und/oder Wärme versintert. Der Druck bewirkt eine Verdichtung der Polystyrol-Partikel, wobei diese sich verformen und an die benachbarten Polystyrol-Partikel derart anschmiegen, dass zwischen den Polystyrol-Partikeln lediglich ein isoliertes Zwickelvolumen verbleibt. Alternativ oder ergänzend kann dieser Effekt durch die Zugabe von Wärme bewirkt werden, welche zu einer Ausdehnung der Partikel innerhalb der Form führt. Da das Volumen der Form jedoch begrenzt ist, werden die Partikel gegeneinander gedrückt.

Vorgeschlagen wird ferner ein Dämmelement, das nach einem erfindungsgemäßen Verfahren hergestellt worden, wasserundurchlässig und wasserdampfdiffusionsoffen ist. Ein solches Dämmelement nimmt kein Wasser auf, behindert aber die Wasserdampfdiffusion nicht. Es ist demnach insbesondere im Außenbereich oder in feuchtigkeitsbelasteten Innenräumen als Schall- und/oder Wärmedämmelement einsetzbar. Die Wasserundurchlässigkeit des Dämmelementes ist bevorzugt Folge des Versinterns unter Zugabe von Druck und/oder Wärme, bei welchem die zwischen den Partikeln verbleibenden Zwickelräume voneinander isoliert werden.

Schließlich wird die Verwendung eines nach einem erfindungsgemäßen Verfahren hergestellten Dämmelementes zur Schall- und/oder Wärmedämmung einer Gebäudewand oder -decke vorgeschlagen. Hierin ist die bevorzugte Verwendung eines solchen Dämmelementes zu sehen, da hierbei die besonderen Eigenschaften, insbesondere die erhöhte Brandbeständigkeit unter Beibehaltung der sehr guten Wärmedämmeigenschaften, besonders gut zum Tragen kommen. Ferner wird den hohen Brandschutzanforderungen im Baubereich Rechnung getragen.

Das erfindungsgemäße Verfahren sowie ein hiernach hergestelltes Dämmelement werden nachfolgend anhand von Beispielen näher erläutert.

### Beispiel 1

Es wurden 200 g vorgeschäumte Polystyrol-Partikel (Korngröße 3 bis 8 mm, Schüttdichte 0,015 bis 0,16 g/cm³) mit 600 g Blähgraphit beschichtet, indem zunächst 600 g eines 1K-Polyurethan-Schaums (StoTurbofix Mini) auf die bewegten Polystyrol-Partikel aufgesprüht wurden. Anschließend - vor dem Trocknen der Beschichtung aus Polyurethanschaum - wurde das Blähgraphit zugeben und innig mit den beschichteten Polystyrol-Partikeln vermischt.

40 Vol.-% dieser Mischung wurden anschließend- vor dem vollständigen Aushärten des Polyurethanschaums - mit 60 Vol.-% unbeschichteter vorgeschäumter Polystyrol-Partikel homogen vermischt und sodann in eine Form der Abmessungen 30 cm x 30 cm x 10 cm eingegeben und unter Zugabe von Druck (1 bar) und Wärme (100°C), wobei Wasserdampf als Heizmedium diente, der die Form 10 bis 15 Sekunden lang von oben nach unten flächig durchströmte, verblockt. Nach dem Druckabbau wurde das Formteil aus der Form genommen und über einen Zeitraum von einer Woche bei Raumtemperatur getrocknet.

Das derart hergestellte Formteil wies eine Wärmeleitfähigkeit λ nach DIN EN 12667 von 0,039 W/(mK) und eine Dichte ρ nach DIN EN 1602 von 40,7 kg/m³ auf. Ferner wurde das Brandverhalten des Formteils getestet, wobei das Formteil zur Beurteilung der Brennbarkeit und des Brandverhaltens einer rauschenden Bunsenbrennerflamme ausgesetzt wurde. Das Testverfahren zeigte kein thermoplastisches Fließen der Schmelze. Insbesondere bildete sich kein Polymersee. Ein brennendes Abtropfen sowie ein selbstständiges Weiterbrennen der Schmelze wurden ebenfalls nicht beobachtet.

### Beispiel 2

Es wurden 200 g vorgeschäumte Polystyrol-Partikel (Korngröße 3 bis 8 mm, Schüttdichte 0,015 bis 0,16 g/cm³) mit 400 g einer wässrigen, organischen Dispersionsbrandschutzfarbe (KBS Foamcoat, Fa. BASF) beschichtet, indem die Polystyrol-Partikel und die Brandschutzfarbe unter Zusatz von 200 g Wasser innig vermischt wurden. Anschließend - vor dem Trocknen der wässrigen Brandschutzfarbe - wurden 600 g Blähgraphit zugeben und innig vermischt.

20 Vol.-% dieser Mischung wurden anschließend- vor dem Trocknen der wässrigen Brandschutzfarbe - mit 80 Vol.-% unbeschichteter vorgeschäumter Polystyrol-Partikel homogen vermischt und sodann in eine Form der Abmessungen 30 cm x 30 cm x 10 cm eingegeben und unter Zugabe von Druck (1 bar) und Wärme (100°C), wobei Wasserdampf als Heizmedium diente, der die Form 10 bis 15 Sekunden lang von oben nach unten flächig durchströmte, verblockt. Nach dem Druckabbau wurde das Formteil aus der Form genommen und über einen Zeitraum von einer Woche bei Raumtemperatur getrocknet.

Das derart hergestellte Formteil wies eine Wärmeleitfähigkeit λ nach DIN EN 12667 von 0,037 W/(mK) und eine Dichte ρ nach DIN EN 1602 von 28,6 kg/m³ auf. Ferner wurde das Brandverhalten des Formteils getestet, wobei das Formteil zur Beurteilung der Brennbarkeit und des Brandverhaltens einer rauschenden Bunsenbrennerflamme ausgesetzt wurde. Das Testverfahren zeigte kein thermoplastisches Fließen der Schmelze. Ein brennendes Abtropfen fand nicht statt. Ferner konnte ein selbstständiges Weiterbrennen des Prüfkörpers nach Entfernen der Flamme vollständig unterbunden werden.

### Beispiel 3

Es wurden 200 g vorgeschäumte Polystyrol-Partikel (Korngröße 3 bis 8 mm, Schüttdichte 0,015 bis 0,16 g/cm³) mit 400 g einer wässrigen Polymerdispersion (Styrol-Acrylat Bindemittel, mit einem Feststoffgehalt von 50 Gew.-%) beschichtet, indem die Polystyrol-Partikel und die Polymerdispersion innig vermischt wurden. Anschließend - vor dem Trocknen der wässrigen Polymerdispersion - wurden 600 g Blähgraphit zugeben und innig vermischt.

10 Vol.-% dieser Mischung wurden anschließend- vor dem Trocknen der wässrigen Polymerdispersion - mit 90 Vol.-% unbeschichteter vorgeschäumter Polystyrol-Partikel homogen vermischt und sodann in eine Form der Abmessungen 30 cm x 30 cm x 10 cm eingegeben und unter Zugabe von Druck (1 bar) und Wärme (100°C), wobei Wasserdampf als Heizmedium diente, der die Form 10 bis 15 Sekunden lang von oben nach unten flächig durchströmte, verblockt. Nach dem Druckabbau wurde das Formteil aus der Form genommen und über einen Zeitraum von einer Woche bei Raumtemperatur getrocknet.

Das derart hergestellte Formteil wies eine Wärmeleitfähigkeit λ nach DIN EN 12667 von 0,032 W/(mK) und eine Dichte ρ nach DIN EN 1602 von 20,2 kg/m³ auf. Ferner wurde das Brandverhalten des Formteils getestet, wobei das Formteil zur Beurteilung der Brennbarkeit und des Brandverhaltens einer rauschenden Bunsenbrennerflamme ausgesetzt wurde. Das Testverfahren zeigte ein deutlich vermindertes thermoplastisches Fließen der heißen Schmelze. Die Bildung eines Polymersees war lokal begrenzt. Das brennende Abtropfen und das selbstständige Weiterbrennen der Schmelze waren stark vermindert.

### Beispiel 4

Es wurden 200 g vorgeschäumte Polystyrol-Partikel (Korngröße 3 bis 8 mm, Schüttdichte 0,015 bis 0,16 g/cm³) mit 600 g einer wässrigen, organischen Dispersionsbrandschutzfarbe (StoPrefa Color 1000 auf Polyester-Polyurethan-Bindemittel-Basis, mit einem Feststoffgehalt des Bindemittels von 40 Gew.-%) beschichtet, indem die Polystyrol-Partikel und die Brandschutzfarbe innig vermischt wurden. Anschließend - vor dem Trocknen der wässrigen Brandschutzfarbe - wurden 600 g Blähgraphit zugeben und innig vermischt.

20 Vol.-% dieser Mischung wurden anschließend- vor dem Trocknen der wässrigen Brandschutzfarbe - mit 80 Vol.-% unbeschichteter vorgeschäumter Polystyrol-Partikel homogen vermischt und sodann in eine Form der Abmessungen 30 cm x 30 cm x 10 cm eingegeben und unter Zugabe von Druck (1 bar) und Wärme (100°C), wobei Wasserdampf als Heizmedium diente, der die Form 10 bis 15 Sekunden lang von oben nach unten flächig durchströmte, verblockt. Nach dem Druckabbau wurde das Formteil aus der Form genommen und über einen Zeitraum von einer Woche bei Raumtemperatur getrocknet.

Das derart hergestellte Formteil wies eine Wärmeleitfähigkeit λ nach DIN EN 12667 von 0,034 W/(mK) und eine Dichte ρ nach DIN EN 1602 von 26,9 kg/m³ auf. Ferner wurde das Brandverhalten des Formteils getestet, wobei das Formteil zur Beurteilung der Brennbarkeit und des Brandverhaltens einer rauschenden Bunsenbrennerflamme ausgesetzt wurde. Das Testverfahren zeigte ein stark vermindertes thermoplastisches Fließen der Schmelze. Insbesondere bildete sich kein Polymersee. Das brennende Abtropfen sowie das selbstständige Weiterbrennen der Schmelze waren stark vermindert.

### Referenzbeispiel

Es wurden 9 Liter vorgeschäumte Polystyrol-Partikel (Korngröße 3 bis 8 mm, Schüttdichte 0,015 bis 0,16 g/cm³) in eine Form der Abmessungen 30 cm x 30 cm x 10 cm eingegeben und unter Zugabe von Druck (1 bar) und Wärme (100°C), wobei Wasserdampf als Heizmedium diente, der die Form 10 bis 15 Sekunden lang von oben nach unten flächig durchströmte, verblockt. Nach dem Druckabbau wurde das Formteil aus der Form genommen und über einen Zeitraum von einer Woche bei Raumtemperatur getrocknet.

Das derart hergestellte Formteil wies eine Wärmeleitfähigkeit λ nach DIN EN 12667 von 0,0297 W/(mK) und eine Dichte ρ nach DIN EN 1602 von 15,8 kg/m³ auf. Ferner wurde das Brandverhalten des Formteils getestet, wobei das Formteil zur Beurteilung der Brennbarkeit und des Brandverhaltens einer rauschenden Bunsenbrennerflamme ausgesetzt wurde. Das Testverfahren zeigte ein sofortiges thermoplastisches Schmelzen mit brennendem Abtropfen, was die Bildung eines brennenden Polymersees zur Folge hatte.

Ein nach einem erfindungsgemäßen Verfahren hergestelltes Dämmelement (Beispiele 1 bis 4) weist demnach gegenüber einem herkömmlichen Dämmelement aus Polystyrol-Hartschaum (Referenzbeispiel) ein deutlich verbessertes Brandverhalten auf. Aufgrund einer nicht mehr fließfähigen Schmelze oder eines stark verminderten Fließverhaltens bleibt der Brandherd lokal begrenzt. Insbesondere bildet sich kein brennender Polymersee. Bei allen Beispielen kamen die gleichen vorgeschäumten Polystyrol-Partikel zum Einsatz.

## Patentansprüche

1. Verfahren zur Herstellung eines flammgeschützten Dämmelementes, bei welchem vorgeschäumte Polystyrol-Partikel verwendet werden, von denen zumindest ein Teil vor dem Einfüllen in eine Form und dem Versintern beschichtet werden, wobei die vorgeschäumten Polystyrol-Partikel zumindest teilweise mit einem organischen Bindemittel und mit wenigstens einem Flammschutzmittel beschichtet werden,
**dadurch gekennzeichnet, dass** die vorgeschäumten und mit Bindemittel und Flammschutzmittel beschichteten Polystyrol-Partikel vor dem vollständigen Trocknen der Beschichtung in eine Form eingegeben und versintert werden.

2. Verfahren nach Anspruch 1,
**dadurch gekennzeichnet, dass** ein Flammschutzmittel zum Beschichten der vorgeschäumten Polystyrol-Partikel verwendet wird, das im Brandfall eine ablative oder intumeszierende Schutzschicht bildet, und/oder, dass Blähgraphit als Flammschutzmittel verwendet wird.

3. Verfahren nach Anspruch 1 oder 2,
**dadurch gekennzeichnet, dass** ein wasserbasiertes oder wasserfreies duroplastisches Bindemittel, wie beispielsweise Epoxidharz oder Polyurethan, ein wasserbasiertes oder wasserfreies Dispersionsbindemittel und/oder eine Acrylat, Styrolacrylat, Vinylacetat, Vinylacetat-Ethylen und/oder Vinylchlorid enthaltende Formulierung als organisches Bindemittel zum Beschichten der Polystyrol-Partikel verwendet wird.

4. Verfahren nach einem der vorhergehenden Ansprüche,
**dadurch gekennzeichnet, dass** das Bindemittel und das Flammschutzmittel zeitlich versetzt, vorzugsweise mittels Sprühen, Spritzen, Tauchen und/oder Mischen, auf die vorgeschäumten Polystyrol-Partikel aufgebracht werden.

5. Verfahren nach einem der vorhergehenden Ansprüche,
**dadurch gekennzeichnet, dass** die vorgeschäumten und zumindest mit Bindemittel beschichteten Polystyrol-Partikel vor dem vollständigen Trocknen der Beschichtung mit einem Flammschutzmittel beschichtet werden.

6. Verfahren nach einem der vorhergehenden Ansprüche,
**dadurch gekennzeichnet, dass** den beschichteten vorgeschäumten Polystyrol-Partikeln vor dem Eingeben in eine Form unbeschichtete vorgeschäumte Polystyrol-Partikel beigemischt werden, wobei der Anteil der unbeschichteten vorgeschäumten Polystyrol-Partikel vorzugsweise 0 bis 95 Vol.-%, weiterhin vorzugsweise 25 bis 90 Vol.-% und besonders bevorzugt 50 bis 88 Vol.-% bezogen auf das Gesamtvolumen der vorgeschäumten Polystyrol-Partikel beträgt.

7. Verfahren nach einem der vorhergehenden Ansprüche,
**dadurch gekennzeichnet, dass** 30 bis 95 Gew.-% Polystyrol-Partikel, 2,5 bis 67,5 Gew.-% Bindemittel und 2,5 bis 67,5 Gew.-% Flammschutzmittel, vorzugsweise 40 bis 90 Ges.-% Polystyrol-Partikel, 5 bis 55 Gew.-% Bindemittel und 5 bis 55 Gew.-% Flammschutzmittel, weiterhin vorzugsweise 50 bis 85 Ges.-% Polystyrol-Partikel, 7,5 bis 35 Gew.-% Bindemittel und 7,5 bis 35 Gew.-% Flammschutzmittel, bezogen auf das Trockengesamtgewicht der Ausgangsstoffe verwendet werden.

8. Verfahren nach einem der vorhergenden Ansprüche,
**dadurch gekennzeichnet, dass** bezogen auf das jeweilige Trockengewicht das Gewichtsverhältnis der vorgeschäumten Polystyrol-Partikel zum Flammschutzmittel 0,4 bis 38, vorzugsweise 0,75 bis 34, weiterhin vorzugsweise 1,05 bis 20 beträgt.

9. Verfahren nach einem der vorhergehenden Ansprüche,
**dadurch gekennzeichnet, dass** den vorgeschäumten, beschichteten und/oder unbeschichteten Polystyrol-Partikeln vor dem Eingeben in die Form Fasern, Füllstoffe und/oder Additive zugegeben werden.

10. Verfahren nach einem der vorhergehenden Ansprüche,
**dadurch gekennzeichnet, dass** die Ausgangsstoffe in der Form unter Zugabe von Druck und/oder Wärme versintert werden.

11. Dämmelement, das nach einem der vorhergehenden Verfahren hergestellt worden, wasserundurchlässig und wasserdampfdiffusionsoffen ist.

12. Verwendung eines Dämmelementes, das nach einem der vorhergehenden Verfahren hergestellt worden ist, zur Schall- und/oder Wärmedämmung einer Gebäudewand oder -decke.

## Claims

1. A method for producing a flame-retardant insulating element, in which pre-foamed polystyrene particles are used, of which at least some are coated before filling into a mould and sintering, wherein the pre-foamed polystyrene particles are coated at least in part with an organic binder and at least one flame retardant,
**characterised in that** the pre-foamed polystyrene particles coated with binder and flame retardant are introduced into a mould and are sintered before the coating has fully dried.

2. The method according to claim 1,
**characterised in that** a flame retardant that forms an ablative or intumescent protective layer in the event of a fire is used to coat the pre-foamed polystyrene particles, and/or **in that** expandable graphite is used as flame retardant.

3. The method according to claim 1 or 2,
**characterised in that** a water-based or anhydrous thermoset binder, such as epoxy resin or polyurethane, a water-based or anhydrous dispersion binder, and/or a formulation containing acrylate, styrene acrylate, vinyl acetate, vinyl acetate ethylene and/or vinyl chloride is used as organic binder for coating the polystyrene particles.

4. The method according to any one of the preceding claims,
**characterised in that** the binder and the flame retardant are applied at different times to the pre-foamed polystyrene particles, preferably by means of spraying, injection, immersion and/or mixing.

5. The method according to any one of the preceding claims,
**characterised in that** the pre-foamed polystyrene particles coated at least with binder are coated with a flame retardant before the coating has dried fully.

6. The method according to any one of the preceding claims,
**characterised in that** uncoated pre-foamed polystyrene particles are mixed with the coated pre-foamed polystyrene particles before introduction into a mould, wherein the proportion of the uncoated pre-foamed polystyrene particles is preferably 0 to 95 vol. %, more preferably 25 to 90 vol. %, and particularly preferably 50 to 88 vol. %, in relation to the total volume of the pre-foamed polystyrene particles.

7. The method according to any one of the preceding claims,
**characterised in that** 30 to 95 % by weight of polystyrene particles, 2.5 to 67.5 % by weight of binder, and 2.5 to 67.5 % by weight of flame retardant, preferably 40 to 90 % by weight of polystyrene particles, 5 to 55 % by weight of binder, and 5 to 55 % by weight of flame retardant, more preferably 50 to 85 % by weight of polystyrene particles, 7.5 to 35 % by weight of binder, and 7.5 to 35 % by weight of flame retardant are used, in relation to the total dry weight of the starting materials.

8. The method according to any one of the preceding claims,
**characterised in that** the ratio by weight of the pre-foamed polystyrene particles to the flame retardant is 0.4 to 38, preferably 0.75 to 34, more preferably 1.05 to 20, in relation to their respective dry weights.

9. The method according to any one of the preceding claims,
**characterised in that** fibres, fillers and/or additives are added to the pre-foamed coated and/or uncoated polystyrene particles prior to the introduction into the mould.

10. The method according to any one of the preceding claims,
**characterised in that** the starting materials are sintered in the mould under addition of pressure and/or heat.

11. An insulating element that has been produced in accordance with one of the preceding methods and is impermeable to water and is open to steam diffusion.

12. Use of an insulating element that has been produced in accordance with any one of the preceding methods for sound insulation and/or heat insulation of a building wall or ceiling.

## Revendications

1. Procédé de fabrication d'un élément isolant à retardement de flammes, dans laquelle sont utilisées des particules de polystyrène préexpansé dont au moins une partie est revêtue avant de les incorporer dans un moule et de les fritter, les particules de polystyrène préexpansé étant revêtues du moins partiellement d'un liant organique et d'au moins un retardateur de flammes,
**caractérisé en ce que** les particules de polystyrène préexpansé revêtues de retardateur de flammes sont incorporées dans un moule et frittées avant le séchage complet du revêtement.

2. Procédé selon la revendication 1,
**caractérisé en ce qu'**on utilise pour revêtir les particules de polystyrène préexpansé un retardateur de flammes qui constitue, en cas de flammes, une couche protectrice ablative ou intumescente et/ou qu'on utilise du graphite expansé comme retardateur de flammes.

3. Procédé selon la revendication 1 ou 2,
**caractérisé en ce qu'**on utilise un liant duroplastique à base d'eau ou sans eau, comme par exemple de la résine époxyde ou du polyuréthane, un liant à dispersion à base d'eau ou sans eau et/ou une formulation contenant de l'acrylate, du styrène acrylate, du vinyle acétate, du vinyle acétate d'éthylène et/ou du vinyle chlorure comme liant organique pour revêtir les particules de polystyrène.

4. Procédé selon une des revendications précédentes,
**caractérisé en ce que** le liant et le retardateur de flammes sont appliqués avec un décalage temporel, de préférence par pulvérisation, injection, trempage et/ou mélange, sur les particules de polystyrène préexpansé.

5. Procédé selon une des revendications précédentes,
**caractérisé en ce que** les particules de polystyrène préexpansé revêtues au moins de liant sont revêtues avant le séchage complet du revêtement avec un retardateur de flammes.

6. Procédé selon une des revendications précédentes,
**caractérisé en ce que** des particules de polystyrène préexpansé non revêtues sont mélangées aux particules de polystyrène préexpansé revêtues avant de les incorporer dans un moule, la proportion des particules de polystyrène préexpansé non revêtues étant de préférence de 0 à 95 % en volume, plus préférentiellement 25 à 90 % en volume et particulièrement préférentiellement 50 à 88 % en volume par rapport au volume total des particules de polystyrène préexpansé.

7. Procédé selon une des revendications précédentes,
**caractérisé en ce que** 30 à 95 % en poids de particules de polystyrène, 2,5 à 67,5 % en poids de liant et 2,5 à 67,5 % en poids de retardateur de flammes, de préférence 40 à 90 % en poids de particules de polystyrène, 5 à 55 % en poids de liant et 5 à 55 % en poids de retardateur de flammes, plus préférentiellement 50 à 85 % en poids de particules de polystyrène, 7,5 à 35 % en poids de liant et 7,5 à 35 % en poids de retardateur de flammes par rapport au poids total à sec des substances initiales sont utilisés.

8. Procédé selon une des revendications précédentes,
**caractérisé en ce que**, par rapport au poids à sec respectif, le ratio de poids des particules de polystyrène préexpansé par rapport au retardateur de flammes est de 0,4 à 38, de préférence de 0,75 à 34, plus préférentiellement 1,05 à 20.

9. Procédé selon une des revendications précédentes,
**caractérisé en ce que** des fibres, des matières de charge et/ou des additifs sont ajoutés aux particules de polystyrène expansé revêtues et/ou non revêtues avant de les incorporer dans le moule.

10. Procédé selon une des revendications précédentes,
**caractérisé en ce que** les substances initiales sont frittées dans le moule sous apport de pression et/ou de chaleur.

11. Élément isolant qui, après avoir été fabriqué selon un des procédés précédents, est imperméable à l'eau et ouvert à la diffusion de vapeur d'eau.

12. Utilisation d'un élément isolé qui a été fabriqué selon un des procédés précédents pour l'isolation phonique et/ou thermique d'un mur ou d'un plafond de bâtiment.
